# EUROPEAN PATENT SPECIFICATION

(11) **EP 1 638 355 B1**
(45) Date of publication and mention of the grant of the patent: **29.01.2014**
(21) Application number: 05270048.1
(22) Date of filing: 07.09.2005
(51) Int. Cl.: H04W 84/08, H04W 12/04, H04L 29/06

(54) **A communication system and method of call group management therefor**
Ein Kommunikationssystem und zugehöriges Verfahren für Rufgruppenverwaltung
Un système de communication et procédé de gestion des groupes d'appel correspondant

(30) Priority: 15.09.2004 GB 0420440
(43) Date of publication of application: 22.03.2006
(73) Proprietor: Motorola Solutions, Inc., Schaumburg IL 60196 (US)
(72) Inventor: Pappas, Scott James, Schaumburg, Illinois 60196 (US); Hason, Baruh, 6788 Tel Aviv (IL); Kruegel, Christopher A, Schaumburg, Illinois 60196 (US); Pedersen, Kristian Gronkjaer, 2600 Glostrup (DK)
(74) Representative: Treleven, Colin

(56) References cited:
- EP-A- 1 253 797
- WO-A-02/067486
- MARCEL WALDVOGEL ET AL: "The VersaKey Framework: Versatile Group Key Management" IEEE JOURNAL ON SELECTED AREAS IN COMMUNICATIONS, IEEE SERVICE CENTER, PISCATAWAY, US, vol. 17, no. 9, September 1999 (1999-09), XP011055017 ISSN: 0733-8716
- "Terrestrial Trunked Radio (TETRA); Voice plus Data (V+D); Part 7: Security; 3 Definitions, symbols and abbreviations; 4.2 Air Interface key management mechanisms; 4.5 OTAR Protocols; A.2 OTAR PDUs" 16 February 2001 (2001-02-16), ETSI EN 300392-7 V2.1.1, PAGE(S) ,12-15,21 , XP002224025 * the whole document *

## Description

### Field of the invention

The invention relates to a communication system and method of call group management therefor and in particular, but not exclusively, to a system for call group management in a TETRA (TErrestrial Trunked RAdio) cellular communication system.

### Background of the Invention

In a cellular communication system, a geographical region is divided into a number of cells each of which is served by a base station. The base stations are interconnected by a fixed network which can communicate data between the base stations. A remote unit is served via a radio communication link by the base station of the cell within which the remote unit is situated. Units referred to herein as 'remote units' may alternatively be referred to as 'mobile stations'.

As a remote unit moves, it may move from the coverage of one base station to the coverage of another, i.e. from one cell to another. As the remote unit moves towards a new base station, it enters a region of overlapping coverage of two base stations and within this overlap region it changes to be supported by the new base station. As the remote unit moves further into the new cell, it continues to be supported by the new base station. This is known as cell reselection or handover.

Communication from a remote unit to a base station is known as uplink, and communication from a base station to a remote unit is known as downlink.

The fixed network interconnecting the base stations is operable to route data between any two base stations, thereby enabling a remote unit in a cell to communicate with a remote unit in any other cell. In addition, the fixed network may comprise gateway functions for interconnecting to external networks such as the Public Switched Telephone Network (PSTN), thereby allowing remote units to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Examples of cellular communication systems include both public cellular communication system such as the Global System for Mobile communication (GSM) and Professional Radio (PMR) systems such as TETRA (TErrestrial Trunked RAdio).

TETRA is a Time Division Multiple Access (TDMA) system wherein 25 kHz wide channels are further divided into four time slots which may be individually assignable. Each time slot has a duration of 14.167 msecs and four timeslots are combined into a time frame having a duration of 56.67 msecs.

Each of the four time slots in a time frame may be individually allocated to the same or different remote units. Furthermore, the time frames are combined into multiframes comprising 18 time frames. Frame number 18 is reserved as a control frame wherein control information may be communicated during an active call.

Although TETRA may be used as a public cellular communication system, it is designed to provide a number of features and services which are particularly suitable for private organisations or groups such as the emergency services.

For example, TETRA provides a number of features and services for managing and controlling group calls as well as for managing the membership of these groups. Other features and services provided by TETRA include, push-to-talk channel allocation, broadcast calls etc.

The possibility of dynamically managing, reconfiguring and organising talk groups is of the utmost importance for many organisations using TETRA communication systems. One feature which is highly useful is the possibility of combining two or more existing talk groups. For example, a first talk group may be set up for mobile stations of a unit of the police and a second talk group may be formed by a group of mobile stations of a unit of the fire service. In an emergency involving the police unit and the fire service unit, it is advantageous to simply patch the two existing talk groups together thereby forming a third talk group comprising the mobile stations of the first and the second talk group in order to allow the police unit and the fire service unit to operate as a single unit.

TETRA furthermore provides for a high level of security which may be optimised for specific purposes. For example, calls in TETRA may be end-to-end encrypted in order to prevent eavesdropping or interception of the messages. Such encryption is invaluable for many public services including for example law enforcement organisations.

Aspects of end-to-end encryption mechanisms for TETRA are described in ETSI (European Telecommunication Standards Institute) specification EN 302 109. ETSI EN 302 109 specifies a voice encryption and decryption mechanism wherein an encryption function of a transmitting unit generates encrypted data that is communicated to a receiving unit where the inverse operation is performed to regenerate the original data. The encryption and decryption functions are based on key streams generated by a key stream generator at the transmitting unit and receiving unit respectively. In order to have successful decoding, it is essential that the key stream of the receiving unit is synchronised with the key stream of the transmitting unit.

Other aspects and variants of end-to-end encryption for Tetra are described in TETRA Memorandum of Understanding (MoU), SFPG (Security and Fraud Prevention Group Recommendation 02 - End-to-End Encryption. This recommendation fully specifies all that is required for an end-to-end service other than the details of the cryptographic algorithms. These are treated as black-box functions. However, in order to provide a complete solution for the general user, the Recommendation concludes with an appendix showing how these cryptographic functions can be realised using a well known algorithm. Recommendation 02 describes a system of end-to-end encryption management including systems for key management, key selection, key distribution, encryption mode selection, encryption control etc. The framework has been designed to be adaptable to a range of Security Policies, with the flexibility being achieved through a number of simple operational choices.

Recommendation 02 includes a specification of an association information message, known as an association set, which is used for communicating information indicating the encryption keys and encryption modes which are to be used. In particular, the association information messages may transmit a message comprising a parameter indicating the Cryptogroup with which a specific talk group is associated. The Cryptogroup allows the mobile stations of the talk group to determine the encryption key to use based on a locally stored set of encryption keys. The set of encryption keys is slowly updated by transmission of new encryption keys for various Cryptogroups over an encryption period of typically a few weeks.

The association information message furthermore transmits a default encryption mode to be used for a specific talk group. The default mode may for example be a mandatory clear mode, a non-encrypted (clear) transmission mode, an encrypted (secure) transmission mode or a mandatory encryption mode. In the clear and secure modes of operation, the mobile station will be able to receive both encrypted and non-encrypted communications whereas it in the mandatory encryption mode is only capable of receiving encrypted communications. This allows a mobile station using the clear mode to communicate with a mobile station using the secure mode with encryption only being applied in one direction, i.e. from the secure mode mobile station to the clear mode mobile station. At the same time, it ensures that communications for mobile stations using the mandatory encryption mode are fully encrypted.

Thus, in accordance with Recommendation 02, the default encryption mode is directly coupled to the individual talk group thereby facilitating group management and setup while ensuring that the mobile stations of the talk group can communicate using encrypted communication.

TETRA allows for the default encryption mode set by the association information message to be changed by the individual user. Thus, in a talk group having an associated default clear encryption mode, a user may select to transmit using the secure transmission mode. This may allow the individual user to have control over the transmissions and in particular allows the user to be certain that any transmissions by the user are encrypted. The mobile stations accordingly provide a user indication of whether encryption is currently used.

However, although the current end-to-end encryption approach is useful in many situations, a number of disadvantages are associated with other applications. In particular, when forming a combined talk group by combining two or more existing talk groups, it is problematic to determine the Cryptogroup (key) and the encryption mode (secure/clear strapping) to be used by a mobile station when communicating using the combined talk group. This is specifically an issue for secure operation as the encryption key and the encryption mode for the combined talk group may be different than for the individually selected talk group.

For example, a first mobile station may belong to a first talk group with a first Cryptogroup and associated with the secure transmission mode, whereas a second mobile station may belong to a second talk group with a second Cryptogroup and associated with the secure transmission mode. When combining the first and the second talk group into a combined talk group, Recommendation 02 provides for an association message to be transmitted specifying the encryption key and encryption mode for the combined talk group to be specified. This ensures that the first and second mobile station will communicate with each other using the same encryption key and encryption mode thereby ensuring that encrypted communication is possible.

However, as the encryption mode of the first and second talk group may be different, this results in the encryption mode being changed for at least one of the mobile stations. As the combination of the first and second talk groups in many situations may be performed by a centralised management centre without the individual user's involvement or knowledge, this will result in the mobile station using a different encryption mode than known to the user. Hence, if the encryption mode of the third talk group is set to clear mode, a user of a talk group using secure mode may begin to transmit in clear mode without knowing it. This could be critical in some situations and is unacceptable for a secure communication system.

Similarly, if the encryption mode of the third talk group is set to secure mode, a user of a talk group using clear mode may begin to transmit in secure mode without knowing it. This may also be unacceptable and may result in potential receivers, lacking equipment or means for secure receptions, to be unable to listen to the transmission.

One approach to supporting encrypted communication when combining talk groups have been used in a communication system known as ASTRO25™.

However, in ASTRO25™, a dedicated encryption key is reserved for use by a combined talk group and whenever a mobile station is part of a combined talk group, it must use this dedicated encryption key. Hence, in ASTRO25™, the individual mobile station must be informed that it has been regrouped to a new talk group such that it can actively select the dedicated encryption key. This reduces the flexibility of the system and reduces the level of security as a predefined key is more susceptible to discovery and consequent misuse than an encryption key which can be dynamically selected for a specific talk group.

Accordingly, the combining of call groups using encrypted communication is problematic and an improved system for combining call groups supporting encrypted communication would be advantageous.

An example of the prior art can be found in document "The VersaKey Framework: Versatile Group Key Management", MARCEL WALDVOGEL ET AL, IEEE JOURNAL ON SELECTED AREAS IN COMMUNICATIONS, IEEE SERVICE CENTER, PISCATAWAY, US, vol. 17, no. 9, September 1999 (1999-09), XP011055017.

### Summary of the Invention

Accordingly, the Invention seeks to preferably mitigate, alleviate or eliminate one or more of the above mentioned disadvantages singly or in any combination.

In accordance to the present invention, a wireless communication system as set forth in claim 1 and a method as set forth in claim 16 are provided. Embodiments of the invention are claimed in the dependent claims.

According to a first aspect of the invention there is provided a wireless communication system comprising:
mobile stations adapted to, selectably, transmit and receive encrypted and non-encrypted transmissions;
a first plurality of the remote stations (mobile stations) belonging to a first call group (talk group) having an associated first encryption key and an associated first encryption mode;
a second plurality of remote stations belonging to a second call group having an associated second encryption key and an associated second encryption mode;
means for forming a third call group comprising the first and the second call groups and having an associated third encryption key;
wherein the first plurality of remote stations is operable to communicate on the third call group the first encryption mode and, when the first encryption mode requires encryption, using the third encryption key; and
the second plurality of remote stations is operable to communicate on the third call group using the second encryption mode, and, when the second encryption mode requires encryption, using the third encryption key.

The invention may provide for an improved system for combining call groups supporting encrypted communication. The inventor's of the current invention have realised that conventional systems for combining call groups supporting encryption are disadvantageous and may be improved. In particular, the inventors have realised that by separately associating encryption keys and encryption modes, improved performance may be achieved. For example, by using a common third encryption key while allowing remote stations to use the encryption mode of their respective original call groups, it is ensured that encrypted communication is supported using the common third encryption key while ensuring that each remote station uses encryption in accordance with the individual setting of the remote station.

The invention may provide improved security as a common third encryption key may be dynamically associated with the combined third group. Hence, an association between a security key and the third key obviates the need for a common predefined key reserved for use for combined groups. The same procedures for distribution and selection of the third security key as for the first and second security keys may be used, thereby facilitating key distribution and management.

In some embodiments, the first and second encryption mode is used for determining the security characteristics of transmissions and the third encryption mode is used for determining the security characteristics of the receiving communication units.

According to an optional feature of the invention, the means for forming the third call group comprises means for communicating an identification of the third encryption key to the first plurality and the second plurality of remote stations. This may provide improved encryption performance and/or a flexible key management and distribution process.

According to an optional feature of the invention, the means for communicating is operable to communicate the identification of the third encryption key on the first call group using the first encryption mode and the first encryption key. This may facilitate setting up the third call group and/or provides for a practical way of distributing the third key using existing call group. According to an optional feature of the invention, a call initiating remote station of the first plurality of remote stations comprises: means for transmitting a call instigation message on the first call group using the first encryption mode; means for receiving an association message associating the call with the third call group; and means for continuing the call on the third call group using the third encryption key and the first encryption mode.

A call initiating remote station may be a remote station setting up a new call. The feature may provide for a flexible system for setting up combined call groups supporting encrypted communication. In particular, individual remote stations may initiate a call using a non-combined call group and may automatically be associated with a combined call group. The feature may obviate the need for predefined or pre-allocated encryption keys for the combined call group.

According to an optional feature of the invention, the third call group has an associated third encryption mode. This may facilitate operation and may provide additional security in many embodiments. Alternatively or additionally it may provide compatibility with many communication systems wherein encryption modes are associated with call group identities.

According to an optional feature of the invention, at least a first remote station of the first plurality of remote stations comprises: means for determining a compatibility between the first encryption mode and the third encryption mode.

This may facilitate operation and group management and/or may reduce the number of unsuccessful call attempts. In particular, it may provide an advantageous way of verifying that a transmitted communication can be received in advance of transmitting the communication. In some embodiments, the encryption modes may be considered compatible if a transmission in accordance with one encryption mode can be received by a remote station using the other encryption mode.

According to an optional feature of the invention, the first remote station comprises means for suppressing a transmission if the first encryption mode is not compatible with the third encryption mode.

This may reduce interference and/or the load of the communication system and/or may reduce power consumption at the first remote station. For example, if the first encryption mode is a clear encryption mode and the third encryption mode is a mandatory secure encryption mode, the communications transmitted from the first remote unit may not be receivable by other remote stations of the third call group. Accordingly, the transmission may be suppressed thereby avoiding that resource of the remote station or the communication system is used for communicating non-receivable messages. The suppression may be partial (such as transmitting a reduced communication or transmitting using less resource) or may be a full suppression (such as no transmission occurring).

According to an optional feature of the invention, the transmission is a call request. In particular, the invention may abstain from initiating a call on the third call group if the encryption modes of the first and third encryption modes are incompatible thereby reducing resource usage.

According to an optional feature of the invention, the first remote station further comprises means for outputting a user indication if the first encryption mode and the third encryption mode are not compatible. This may improve the user experience by the user.

According to an optional feature of the invention, at least a second remote station of the second plurality of remote stations comprises: means for determining a compatibility between an encryption mode of a received signal and the third encryption mode; and means for setting an incompatibility indicator in response to a determination that the encryption mode of the received signal is not compatible with the third encryption mode. This may provide a suitable way of determining if the second remote station is compatible with the remote station originating the received signal.

According to an optional feature of the invention, at least a second remote station of the second plurality of remote stations comprises: means for determining a compatibility between an encryption key of a received signal and the third encryption key; and means for setting an incompatibility indicator in response to a determination that the encryption key of the received signal is not compatible with the third encryption key. This may provide a suitable way of determining if the decryption operation of the second remote station is compatible with the encryption process of the remote station originating the received signal.

According to an optional feature of the invention, at least a second remote station of the second plurality of remote stations comprises: means for determining a compatibility between an encryption mode of a received signal and the second encryption mode; and means for setting an incompatibility indicator in response to a determination that the encryption mode of the received signal is not compatible with the second encryption mode. This may provide a suitable way of determining if the second remote station is compatible with the remote station originating the received signal.

According to an optional feature of the invention, the second remote station further comprises means for suppressing the received signal in response to the incompatibility indication. This may improve the user experience. For example, if the incompatibility indication indicates that encryption is not feasible, the received signal may be suppressed. In particular, for an audio signal, the second remote station may comprise means for muting the received signal in response to the incompatibility indication.

According to an optional feature of the invention, the second remote station further comprises means for generating a user incompatibility indication in response to the incompatibility indication. The user incompatibility indication may be presented to the user in any suitable form including as a visual indication (e.g. a display icon) or an audio signal. This may improve the user experience and/or alert a user to the fact that a communication is received which may not be decrypted.

According to an optional feature of the invention:
a) the first plurality of mobile stations is operable to
   (i) transmit communications to the third call group, with or without encryption, in accordance with the first encryption mode; and
   (ii) receive communications from the third call group, with or without encryption, in accordance with the third encryption mode.
b) the second plurality of mobile stations is operable to:
   (i) transmit communications to the third call group, with or without encryption, in accordance with the second encryption mode; and
   (ii) receive communications from the third call group, with or without encryption, in accordance with the third encryption mode. According to an optional feature of the invention, at least one further mobile station of the first call group is operable: to select a different encryption mode to the first encryption mode, under user control, prior to set-up of the third call group; and
      to continue using the selected encryption mode, after set up of the third call group.

The communication system may optionally be a TETRA cellular communication system.

According to a second aspect of the invention, there is provided a method of call group management in a wireless communication system including mobile stations adapted to, selectably, transmit and receive encrypted and non-encrypted transmissions, a first plurality of remote stations belonging to a first call group having an associated first encryption key and an associated first encryption mode and a second plurality of remote stations belonging to a second call group having an associated second encryption key and an associated second encryption mode; the method comprising the steps of:
forming a third call group comprising the first and the second call group and having an associated third encryption key;
at least one remote station of the first plurality of remote stations communicating on the third call group using the first encryption mode, and, when the first encryption mode requires encryption, using the third encryption key; and
at least one remote station of the second plurality of remote stations communicating on the third call group using the second encryption mode, and, when the second encryption mode requires encryption, using the third encryption key.

According to an optional feature of a second aspect of the invention:
a) the third talk group has an associated third encryption mode;
b) the first plurality of mobile stations:
   (i) transmit communications to the third call group, with or without encryption, in accordance with the first encryption mode; and
   (ii) receive communications from the third call group, with or without encryption, in accordance with the third encryption mode; and
c) the second plurality of mobile stations:
   (i) transmit communications to the third call group, with or without encryption, in accordance with the second encryption mode; and
   (ii) receive communications from the third call group, with or without encryption, in accordance with the third encryption mode.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which

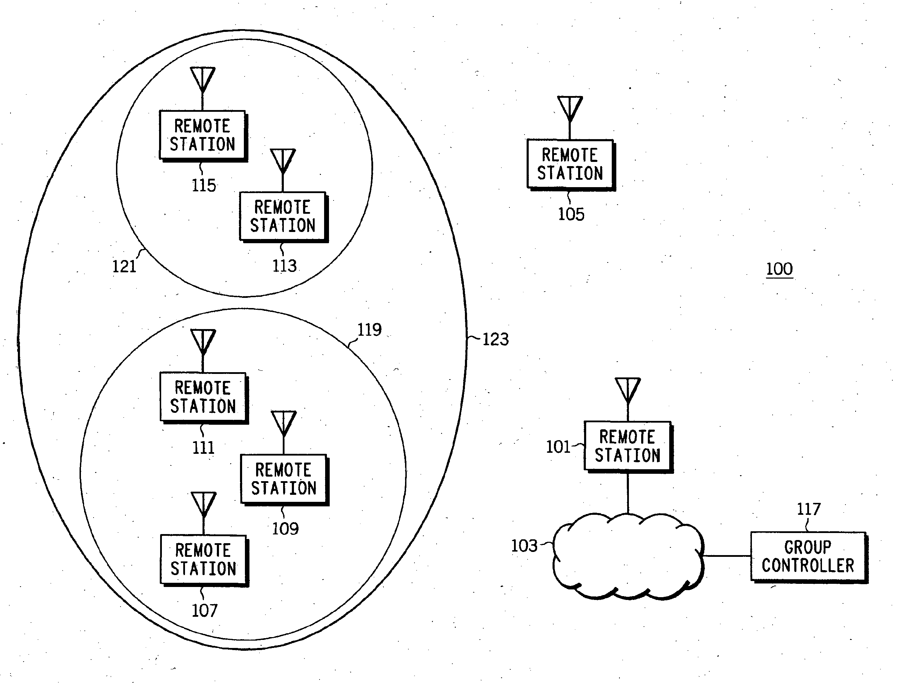

FIG. 1 illustrates a communication system in accordance with an embodiment of the invention.

### Detailed Description of a Embodiments of the Invention

The following description focuses on an embodiment of the invention applicable to encrypted voice communication in a TETRA cellular communication system. However, it will be appreciated that the invention is not limited to this application but may be applied to many other communication systems and services including for example data communication

FIG. 1 illustrates a communication system in accordance with an embodiment of the invention.

The communication system of the embodiment of FIG. 1 is a TETRA cellular communication system 100 (a system which operates in accordance with TETRA standards as defined by ETSI (European Telecommunications Standards Institute). The TETRA system 100 comprises a base station 101 which is coupled to a fixed network 103. It will be appreciated that although FIG. 1 for clarity and brevity illustrates only one base station 101, a typical TETRA communication system will comprise a large number of base stations where each base station forms a cell. The fixed network 103 comprises functionality for routing communication between base stations, interfacing with other communication systems, managing the communication system etc as is well known in the art.

In the example of FIG. 1, the base station 101 supports a number of remote communication stations (mobile stations such as mobile or portable radios) 105-115 in a cell. It will be appreciated that although FIG. 1 illustrates the remote stations to be in the same cell and supported by the same base station 101, the invention is not limited to this specific example but is equally suited for e.g. remote stations in a plurality of different cells and supported by a plurality of different base stations.

TETRA comprises functionality for forming call groups between remote stations. This allows for example all transmissions from one remote station of a call group to be received and decoded by all other remote stations belonging to that call group. In particular, for voice communication, TETRA supports the dynamic formation of talk groups wherein the transmitting user can be heard by all other users belonging to the same call group.

TETRA also comprises functionality for end-to-end encryption of communications between remote stations within a talk group. Accordingly the TETRA technical specifications standardize functionality for supporting and managing end-to-end encryption including functionality for distributing and selecting encryption keys and choosing encryption modes.

In the specific example of FIG. 1, the TETRA communication system 100 further comprises a group controller 117 which is responsible for setting up and managing talk groups.

In the example, a first plurality of remote stations 107-111 form a first talk group 119. The remote units may be for example be used by a police unit and the formation of the talk group allows group calls to be made from one user to all other users in the police unit. The talk group has been setup by the group controller 117 using TETRA control messages as is well known to the person skilled in the art.

In the example, the first talk group 119 has an associated first encryption key and a first encryption mode. Specifically, when setting up the talk group, the group controller 117 transmits an association information message, known as an association set.

The association information message comprises an identification of the specific talk group to which the information relates. Furthermore, the association information message comprises a Cryptogroup indication which allows the remote stations to determine the encryption key to use for secure communication. In particular, the Cryptogroup allows an identification of a specific encryption key from a plurality of previously received and stored encryption keys as is well known in the art.

Furthermore, the association information message comprises an identification of a default encryption mode to be used by remote stations belonging to the talk group.

Four default encryption modes are possible in accordance with the TETRA standards:
Mode 0: Mode 0 is a non-encrypted or clear transmission mode wherein transmissions are transmitted without any encryption. Only non-encrypted communications may possibly be received.
Mode 1: Mode 1 is a non-encrypted or clear transmission mode wherein transmissions are transmitted without any encryption. Both encrypted and non-encrypted communications may possibly be received.
Mode 2: Mode 2 is an encrypted or secure transmission mode wherein transmissions are transmitted with encryption. Both encrypted and non-encrypted communications may possibly be received.
Mode 3: Mode 3 is a mandatory encryption mode wherein transmissions are transmitted with encryption and only encrypted communications may be received.

It will be understood that although these modes are the default modes, a user may e.g. in many embodiments manually modify the mode used for a talk group. For example, a user of remote station may change the mode from Mode 1 to Mode 2 for a specific talk group in order to communicate securely on that talk group. Hence, the association between the individual talk group and the encryption mode may be changed dynamically and/or may be different for different remote stations associated with the talk group.

It will be understood that by sending association information messages to the remote stations of a talk group, all remote stations of the talk group may be set up to use compatible encryption modes and the same encryption key. Thus, the remote stations may communicate using encrypted or clear communications as appropriate. Furthermore for the compatible modes of Mode 1 and 2, a user of a remote station may individually select whether to transmit in clear or secure mode.

In the example of FIG. 1, a second plurality of remote stations 113-115 forms a second talk group 121. For example, the remote stations 113-115 may be used by a fire service unit and the formation of the talk group allows group calls to be made from one user to all other users of the fire service unit. In the example, the second talk group 121 has an associated second encryption key and a second encryption mode. Specifically, the second encryption key and the second encryption mode have been communicated to the remote stations 113-115 by association information messages from the group controller 117.

In some cases, it is advantageous for a combined talk group to be formed by merging or patching two existing talk groups. For example, the police unit and the fire service unit associated with the first and second talk group of FIG. 1 may attend the same emergency situation, in which case it is advantageous for all of the remote stations 107-115 to belong to the same talk group. Furthermore, it is advantageous in many situations that such patching occurs without requiring the individual users to take any specific action or to be involved in the combining of the groups. Indeed the combined group may be formed without the individual users of the remote stations being aware of the combination of existing talk groups.

Accordingly, the group controller 117 comprises functionality for sending control messages, known as DGNA (Dynamic Group Number Assignment) messages, which initialise a third combined talk group 123 comprising the first and second talk groups 119, 121.

In order to support encrypted communication in a combined talk group, it is necessary to arrange for suitable encryption modes and encryption keys to be used by the remote stations of the combined group. The most immediate solution would be to allow the remote stations to continue to use the current encryption keys and encryption modes of the existing talk groups, i.e. for remote stations 107-111 of the first talk group 119 to use the first encryption key and the first encryption mode and for remote stations 113, 115 of the second talk group 121 to use the second encryption key and the second encryption mode. However, this may be restrictive as it requires that the first and second talk groups 119, 121 already use the same encryption key and compatible encryption modes. This will generally not be the case and therefore this approach will not allow secure communication between all remote stations 107 - 115 of the combined talk group.

The alternative of assigning a dedicated encryption mode and encryption key to the third talk group 123 and requiring that the remote stations 107-115 adhere to this also provides problems. In particular, this approach violates good secure communication principles as the encryption mode used is potentially one not selected by the remote station user. For example, if the encryption mode of the third talk group 123 is Mode 1 (i.e. the clear mode) and the encryption mode associated with the first talk group 119 is Mode 2 (i.e. the secure mode), a remote station 107 of the first talk group 119 may initiate communication associated with the third talk group 123 using non-encrypted transmissions despite the user believing that all transmissions are encrypted.

The Inventors of the current invention have realised these problems and appreciated that improved performance may be achieved by a different approach.

In accordance with the exemplary embodiment of FIG. 1, the remote stations 107-115 of the third talk group 123 may use the encryption key associated with the third talk group 123 while using the individual encryption mode of the original first or second talk group 119, 121. Thus, in accordance with the embodiment, remote stations 107-111 of the first talk group 119 communicate on the third talk group 123 using the third encryption key and the first encryption mode while the remote stations 113, 115 of the second talk group 119 communicate on the third talk group 123 using the third encryption key and the second encryption mode.

The usage of the encryption modes may be different for transmitting and receiving. In particular, the first and second encryption modes may be used by the remote stations for determining the transmit encryption mode and a third encryption mode associated with the third group may be used for determining the receive encryption mode of the remote stations.

Accordingly, all remote stations 107-115 use the same encryption key thereby enabling secure communication between all the remote stations 107-115 of the third talk group 123. However, in addition, the individual remote station uses the encryption mode associated with the original first or second talk group 119, 121 and in particular transmissions from the remote stations will remain clear or secure independently of whether the individual remote station is associated with a single original talk group or with a combined talk group. Thus, the setting up of a combined talk group does not change the encryption mode used by the remote stations.

In the embodiment of FIG. 1, the group controller 117 is operable to communicate an identification of the third encryption key to the remote stations 107-115. In particular, the group controller 117 may cause an association information message which identifies the third talk group 123 and comprises a Cryptogroup indication to be transmitted to all remote stations 107-115 of the third talk group 123. In the embodiment of FIG. 1, the association information message furthermore comprises an associated third encryption mode.

The association information message may in some embodiments be communicated on the original first and second talk groups 119, 121, i.e. using the first encryption key and first encryption mode on the first talk group 119 and the second encryption key and second encryption mode on the second talk group 121. This may provide a convenient way of communicating the information and allows the information required for communicating on the third talk group 123 to be supplied to the remote stations before any communication is performed on the third talk group 123.

Thus, DGNA and association information messages may be used to provide the remote stations 107-115 with information relating to the third talk group 123. For example, the Cryptogroup indication of the association information message for the third talk group 123 allows the remote stations to select the third encryption key from the encryption key data previously received.

Specifically, a remote station 107 of, say, the first talk group 119 may initiate a new call by initially transmitting a call instigation message on the first call group using the first encryption mode. A remote station 107 desiring to communicate using a specific talk group, such as the first talk group 119, may thus transmit a call request using the encryption mode of this talk group.

If the selected talk group is not associated with a combined talk group, the call will proceed as in a conventional system. However, if the selected talk group is associated with a combined talk group, say the third call group 123, the group controller 117 will communicate an association message which associates the call with the third call group 123. Specifically, the group controller 117 may indicate in the grant message returned to the remote station 107 that it shall use the identity of the third talk group 123 rather than the selected first talk group 119. Accordingly, the remote station 107 continues the call on the third call group by using the third encryption key while still using the encryption mode of the first talk group 119.

It will be appreciated that the principles are equally applicable to call answering (talkback). E.g., if a call is received using the third talk group 123, it is coupled to the original talk group of the remote station. For example, if the remote station is a remote station 113 of the second talk group 121, a call received on the third talk group 123 is coupled to the second talk group 121 in order to determine the associated encryption mode. However, the encryption key is selected as the encryption key associated with the third talk group 123. Thus, a remote station responding in hangtime will use the key associated with the combined talk group and the encryption mode of it's selected talk group.

It will be appreciated that the exemplary embodiment of FIG. 1 may provide encryption mode and key selection for a remote station involved in a combined talk group without burdening the operator and compromising fundamental secure communication principles. Hence, the embodiment allows a group merge to function consistently, efficiently and effectively.

In some embodiments, the remote stations may further perform one or more compatibility tests to evaluate the compatibility between remote stations of the different call groups being combined.

In particular, a remote station may verify if the encryption mode associated with its original selected encryption mode is compatible with the encryption mode of the combined group.

In particular, a transmitting remote station of the first talk group may determine a compatibility between the first encryption mode and the third encryption mode before transmitting a given transmission, such as a call request. For example, if the first encryption mode is the same as the third encryption mode, communication from the transmitting remote station can be received by remote stations of the third talk group. Accordingly, the first encryption mode is compatible with the third encryption mode.

However, if the first and the third encryption modes are different, these may or may not be compatible. For example, if the first encryption mode is Mode 1 (clear mode) with the option of receiving secure communications, and the third encryption mode is Mode 2 (secure mode) with the option of receiving clear communications, communication is possible from the transmitting remote station to remote stations of the third talk group 123 and the encryption modes are compatible. However, if the first talk group is Mode 1 (clear mode) and the third encryption mode is Mode 3 (mandatory encryption), transmissions from the transmitting remote station cannot be received by remote stations of the third talk group 123 and the encryption modes are incompatible.

In some embodiments, the transmitting remote stations suppress a transmission if the encryption modes are not compatible. For example, if a call is being initiated, the call request may only be transmitted if the encryption modes are compatible thereby reducing the resource use and loading of the TETRA system.

In some embodiments, a user indication is presented to a user if the first encryption mode and the third encryption mode are not compatible. For example, an audio or visual warning signal may be presented if a call initiation is terminated because the encryption modes are not compatible.

As a specific example, before sending a call request during hangtime, a remote station may validate if the desired transmit encryption mode of the selected talk group is allowed to be received on the combined talk group. E.g. the remote station may specifically determine if the receiving remote station may be able to unmute using the secure talk group unmute rules used in TETRA. If this check fails, there is no need to make the request since the other remote stations will not be able to unmute to the call. This may all be performed automatically by the remote station as the user may not be aware that he is participating in a combined group call.

Similarly to a transmitting remote station, a receiving remote station may also perform a compatibility test when a message is received on the combined talk group. In particular, when receiving a call, a remote station may check if the received encryption mode is compatible with the encryption mode of the selected original talk group and/or the encryption mode of the combined talk group. Additionally or alternatively, the remote station may determine if the encryption key of the received signal is compatible with the encryption key of the combined talk group.

If any of these tests fails, the remote station will not be able and/or allowed to decode the received signal. Accordingly the received signal may be suppressed, for example by muting the signal if it is an audio signal. Alternatively or additionally, a user indication of the incompatibility may be presented to the user, for example as an audio or visual indication.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with specific embodiments, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A wireless communication system comprising:
mobile stations (107, 109, 111, 113, 115) adapted to, selectively,
transmit and receive encrypted and non-encrypted transmissions;
a first plurality of the mobile stations (107, 109, 111) belonging to a first call group (119) having an associated first encryption mode and an associated first encryption key;
a second plurality of the mobile stations (113, 115) belonging to a second call group (121) having an associated second encryption mode and an associated second encryption key; and
means (117) for forming a third call group (123) comprising the first (119) and the second (121) call groups and having an associated third encryption key;
wherein:
(i) the first plurality of mobile stations (107, 109, 111) is operable to communicate on the third call group using the first encryption mode, and, when the first encryption mode requires encryption, using the third encryption key; and
(ii) the second plurality of mobile stations (113, 115) is operable to communicate on the third call group using the second encryption mode, and, when the second encryption mode requires encryption, using the third encryption key.

2. The wireless communication system claimed in claim 1 wherein the means for forming the third call group (123) comprises means for communicating an identification of the third encryption key to the first plurality (107, 109, 111) and the second plurality (113, 115) of mobile stations.

3. The wireless communication system claimed in claim 2 wherein the means for communicating is operable to communicate the identification of the third encryption key to the first call group (119) using the first encryption mode and the first encryption key.

4. The wireless communication system claimed in any one of the preceding claims wherein a call initiating mobile station of the first plurality of mobile stations (107, 109, 111) comprises:
means for transmitting a call instigation message on the first call group (119) using the first encryption mode;
means for receiving an association message associating the call with the third call group (123); and
means for continuing the call on the third call group (123) using the third encryption key and the first encryption mode.

5. The wireless communication system as claimed in any preceding claim wherein:
the third talk group (123) has an associated third encryption mode.

6. The wireless communication system as claimed in claim 5 wherein at least a first mobile station of the first plurality of mobile stations (107, 109, 111) comprises:
means for determining a compatibility between the first encryption mode and the third encryption mode.

7. The wireless communication system claimed in claim 6 wherein at least the first mobile station comprises:
means for suppressing a transmission if the first encryption mode is not compatible with the third encryption mode.

8. The wireless communication system as claimed in claim 7 wherein the transmission is a call request.

9. The wireless communication system as claimed in any of the claims 6-8 wherein:
at least the first mobile station further comprises means for outputting a user indication if the first encryption mode and the third encryption mode are not compatible.

10. The wireless communication system claimed in any of claims 5 to 9 wherein at least a second mobile station of the second plurality of mobile stations (113, 115) comprises:
means for determining a compatibility between the third encryption mode and an encryption mode and/or an encryption key of a received signal and; and
means for setting an incompatibility indicator in response to a determination that the encryption mode and/or the encryption key of the received signal, is not compatible with the third encryption mode.

11. The wireless communication system claimed in any one of the preceding claims wherein at least a second mobile station of the second plurality of mobile stations comprises:
means for determining a compatibility between an encryption mode of a received signal and the second encryption mode; and
means for setting an incompatibility indicator in response to a determination that the encryption mode of the received signal is not compatible with the second encryption mode.

12. The wireless communication system claimed in claim 10 or claim 11, wherein the second mobile station further comprises means for suppressing the received signal and/or generating a user incompatibility indication, in response to the incompatibility indication.

13. The wireless communication system as claimed in any claims 5-12, wherein the first and second plurality of mobile stations use the third encryption key when encryption is required, and:
a) the first plurality of mobile stations (107, 109, 111)is operable to:
(i) transmit communications to the third call group (123), with or without encryption, in accordance with the first encryption mode; and
(ii) receive communications from the third call group (123), with or without encryption, in accordance with the third encryption mode; and
b) the second plurality of mobile stations (113, 115) is operable to:
(i) transmit communications to the third call group (123), with or without encryption, in accordance with the second encryption mode; and
(ii) receive communications from the third call group (123), with or without encryption, in accordance with the third encryption mode.

14. The wireless communication system as claimed in any preceding claim, wherein at least one further mobile station of the first call group (119) or the second call group (121) is operable:
to change its mode from a non-encrypted transmission mode to an encrypted transmission mode, under user control, prior to set-up of the third call group (123); and
to continue using the selected encryption mode, after set up of the third call group (123).
the method comprising the steps of:
forming a third call group (123) comprising the first and the second call groups and having an associated third encryption key;
at least one mobile station of the first plurality of mobile stations (107, 109, 111) communicating on the third call group (123) using the first encryption mode, and, when the first encryption mode requires encryption, using the third encryption key; and
at least one mobile station of the second plurality of mobile stations (113, 115) communicating on the third call group (123) using the second encryption mode, and, when the second encryption mode requires encryption, using the third encryption key.

15. The wireless communication system as claimed in any preceding claim, wherein the communication system is a TETRA cellular communication system.

16. A method of call group management for a wireless communication system including mobile stations (107, 109, 111, 113, 115) adapted to, selectively, transmit and receive encrypted and non-encrypted transmissions, a first plurality of the mobile stations (107, 109, 111) belonging to a first call group having an associated first encryption mode and an associated first encryption key, and a second plurality of the mobile stations belonging to a second call group having an associated second encryption mode and an associated second encryption key;

17. The method of call group management in a wireless communication system of claim 16, wherein:
a) the third talk group (123) has an associated third encryption mode;
b) the first plurality of mobile stations (107, 109, 111):
(i) transmit communications to the third call group (123), with or without encryption, in accordance with the first encryption mode; and
(ii) receive communications from the third call group (123), with or without encryption, in accordance with the third encryption mode; and
c) the second plurality of mobile stations (113, 115):
(i) transmit communications to the third call group (123), with or without encryption, in accordance with the second encryption mode; and
(ii) receive communications from the third call group (123), with or without encryption, in accordance with the third encryption mode.

## Patentansprüche

1. Drahtloses Kommunikationssystem, das umfasst:
Mobilstationen (107, 109, 111, 113, 115), die geeignet sind, um verschlüsselte und unverschlüsselte Übertragungen selektiv zu übertragen und zu empfangen;
eine erste Mehrzahl von Mobilstationen (107, 109, 111), die zu einer ersten Rufgruppe (119) gehören, die über eine verknüpfte erste Verschlüsselungsbetriebsart und einen verknüpften ersten Verschlüsselungsschlüssel verfügt;
eine zweite Mehrzahl von Mobilstationen (113, 115), die zu einer zweiten Rufgruppe (121) gehören, die über eine verknüpfte zweite Verschlüsselungsbetriebsart und einem verknüpften zweiten Verschlüsselungsschlüssel verfügt; und
Mittel (117) zum Bilden einer dritten Rufgruppe (123), die die erste (119) und die zweite (121) Rufgruppe umfasst und über einen verknüpften dritten Verschlüsselungsschlüssel verfügt;
wobei:
(i) die erste Mehrzahl von Mobilstationen (107, 109, 111) betreibbar ist, um auf der dritten Rufgruppe unter Verwendung der ersten Verschlüsselungsbetriebsart zu kommunizieren und, wenn die erste Verschlüsselungsbetriebsart eine Verschlüsselung erfordert, den dritten Verschlüsselungsschlüssel verwendet; und
(ii) die zweite Mehrzahl von Mobilstationen (113, 115) betreibbar ist, um auf der dritten Rufgruppe unter Verwendung der zweiten Verschlüsselungsbetriebsart zu kommunizieren und, wenn die zweite Verschlüsselungsbetriebsart eine Verschlüsselung erfordert, den dritten Verschlüsselungsschlüssel verwendet.

2. Drahtloses Kommunikationssystem gemäß Anspruch 1, wobei das Mittel zum Bilden der dritten Rufgruppe (123) umfasst: Mittel zum Kommunizieren einer Identifikation des dritten Verschlüsselungsschlüssels an die erste Mehrzahl (107, 109, 111) und die zweite Mehrzahl (113, 115) von Mobilstationen.

3. Drahtloses Kommunikationssystem gemäß Anspruch 2, wobei das Mittel zum Kommunizieren betreibbar ist, um die Identifikation des dritten Verschlüsselungsschlüssels an die erste Rufgruppe (119) unter Verwendung der ersten Verschlüsselungsbetriebsart und des ersten Verschlüsselungsschlüssels zu kommunizieren.

4. Drahtloses Kommunikationssystem gemäß einem der vorangehenden Ansprüche, wobei eine rufinitiierende Mobilstation von der ersten Mehrzahl von Mobilstationen (107, 109, 111) umfasst:
Mittel zum Übertragen einer Rufveranlassungsnachricht auf der ersten Rufgruppe (119) unter Verwendung der ersten Verschlüsselungsbetriebsart;
Mittel zum Empfangen einer Verknüpfungsnachricht, die den Ruf mit der dritten Rufgruppe (123) verknüpft; und
Mittel zum Fortführen des Rufes auf der dritten Rufgruppe (123) unter Verwendung des dritten Verschlüsselungsschlüssels und der ersten Verschlüsselungsbetriebsart.

5. Drahtloses Kommunikationssystem gemäß einem der vorangehenden Ansprüche, wobei:
die dritte Rufgruppe (123) über eine verknüpfte dritte Verschlüsselungsbetriebsart verfügt.

6. Drahtloses Kommunikationssystem gemäß Anspruch 5, wobei mindestens eine Mobilstation von der ersten Mehrzahl von Mobilstationen (107, 109, 111) umfasst:
Mittel zum Bestimmen einer Kompatibilität zwischen der ersten Verschlüsselungsbetriebsart und der dritten Verschlüsselungsbetriebsart.

7. Drahtloses Kommunikationssystem gemäß Anspruch 6, wobei mindestens die erste Mobilstation umfasst:
Mittel zum Unterdrücken einer Übertragung, wenn die erste Verschlüsselungsbetriebsart nicht mit der dritten Verschlüsselungsbetriebsart kompatibel ist.

8. Drahtloses Kommunikationssystem gemäß Anspruch 7, wobei die Übertragung eine Rufanforderung ist.

9. Drahtloses Kommunikationssystem gemäß einem der Ansprüche 6 - 8, wobei:
mindestens die erste Mobilstation weiterhin umfasst: Mittel zum Ausgeben einer Anwenderanzeige, wenn die erste Verschlüsselungsbetriebsart und die dritte Verschlüsselungsbetriebsart nicht kompatibel sind.

10. Drahtloses Kommunikationssystem gemäß einem der Ansprüche 5 bis 9, wobei mindestens eine zweite Mobilstation von der zweiten Mehrzahl von Mobilstationen (113, 115) umfasst:
Mittel zum Bestimmen einer Kompatibilität zwischen der dritten Verschlüsselungsbetriebsart und einer Verschlüsselungsbetriebsart und/oder eines Verschlüsselungsschlüssels eines empfangenen Signals; und
Mittel zum Setzen eines Inkompatibilitätsanzeigers in Reaktion auf eine Bestimmung, dass die Verschlüsselungsbetriebsart und/oder der Verschlüsselungsschlüssel des empfangenen Signals nicht mit der dritten Verschlüsselungsbetriebsart kompatibel ist.

11. Drahtloses Kommunikationssystem gemäß einem der vorangehenden Ansprüche, wobei mindestens eine zweite Mobilstation der zweiten Mehrzahl von Mobilstationen umfasst:
Mittel zum Bestimmen einer Kompatibilität zwischen einer Verschlüsselungsbetriebsart eines empfangenen Signals und der zweiten Verschlüsselungsbetriebsart; und
Mittel zum Setzen eines Inkompatibilitätsanzeigers in Reaktion auf eine Bestimmung, dass die Verschlüsselungsbetriebsart des empfangenen Signals nicht mit der zweiten Verschlüsselungsbetriebsart kompatibel ist.

12. Drahtloses Kommunikationssystem gemäß Anspruch 10 oder Anspruch 11, wobei die zweite Mobilstation weiterhin umfasst: Mittel zum Unterdrücken des empfangenen Signals und/oder Erzeugen einer Anwenderinkompatibilitätsanzeige, in Reaktion auf die Inkompatibilitätsanzeige.

13. Drahtloses Kommunikationssystem gemäß einem der Ansprüche 5 - 12, wobei die erste und zweite Mehrzahl von Mobilstationen den dritten Verschlüsselungsschlüssel verwenden, wenn eine Verschlüsselung erforderlich ist, und:
a) die erste Mehrzahl von Mobilstationen (107, 109, 111) betreibbar ist, um:
(i) Kommunikationen, mit oder ohne Verschlüsselung, an die dritte Rufgruppe (123) zu senden, in Übereinstimmung mit der ersten Verschlüsselungsbetriebsart, und
(ii) Kommunikationen, mit oder ohne Verschlüsselung, von der dritten Rufgruppe (123) zu empfangen, in Übereinstimmung mit der dritten Verschlüsselungsbetriebsart; und
b) die zweite Mehrzahl von Mobilstationen (113, 115) betreibbar ist, um:
(i) Kommunikationen, mit oder ohne Verschlüsselung, an die dritte Rufgruppe (123) zu senden, in Übereinstimmung mit der zweiten Verschlüsselungsbetriebsart; und
(ii) Kommunikationen, mit oder ohne Verschlüsselung, von der dritten Rufgruppe (123) zu empfangen, in Übereinstimmung mit der dritten Verschlüsselungsbetriebsart.

14. Drahtloses Kommunikationssystem gemäß einem der vorangehenden Ansprüche, wobei mindestens eine weitere Mobilstation der ersten Rufgruppe (119) oder der zweiten Rufgruppe (121) betreibbar ist, um:
ihre Betriebsart unter Anwenderkontrolle vor einer Einrichtung der dritten Rufgruppe (123) von einer unverschlüsselten Übertragungsbetriebsart in eine verschlüsselte Übertragungsbetriebsart zu ändern; und
nach einem Einrichten der dritten Rufgruppe (123), ein Verwenden der ausgewählten Verschlüsselungsbetriebsart fortzusetzen.

15. Drahtloses Kommunikationssystem gemäß einem der vorangehenden Ansprüche, wobei das Kommunikationssystem ein zellulares Kommunikationssystem gemäß dem TETRA-Standard ist.

16. Verfahren für eine Rufgruppen-Verwaltung für ein drahtloses Kommunikationssystem, das Mobilstationen (107, 109, 111, 113, 115) umfasst, die geeignet sind, um verschlüsselte und unverschlüsselte Übertragungen selektiv zu übertragen und zu empfangen, eine erste Mehrzahl von Mobilstationen (107, 109, 111), die zu einer ersten Rufgruppe gehören, die über eine verknüpfte erste Verschlüsselungsbetriebsart und einen verknüpften ersten Verschlüsselungsschlüssel verfügt, und eine zweite Mehrzahl von Mobilstationen, die zu einer zweiten Rufgruppe gehören, die über eine verknüpfte zweite Verschlüsselungsbetriebsart auf einem verknüpften zweiten Verschlüsselungsschlüssel verfügt;
wobei das Verfahren die folgenden Schritte umfasst:
Bilden einer dritten Rufgruppe (123), die die erste und die zweite Rufgruppe umfasst und über einen verknüpften dritten Verschlüsselungsschlüssel verfügt;
Kommunizieren mindestens einer Mobilstation von der ersten Mehrzahl von Mobilstationen (107, 109, 111) auf der dritten Rufgruppe (123) unter Verwendung der ersten Verschlüsselungsbetriebsart und, wenn die erste Verschlüsselungsbetriebsart eine Verschlüsselung erfordert, unter Verwendung des dritten Verschlüsselungsschlüssel; und
Kommunizieren mindestens einer Mobilstation von der zweiten Mehrzahl von Mobilstationen (113, 115) auf der dritten Rufgruppe (123) unter Verwendung der zweiten Verschlüsselungsbetriebsart und, wenn die zweite Verschlüsselungsbetriebsart eine Verschlüsselung erfordert, unter Verwendung des dritten Verschlüsselungsschlüssel.

17. Verfahren für eine Rufgruppen-Verwaltung in einem drahtlosen Kommunikationssystem gemäß Anspruch 16, wobei:
a) die dritte Rufgruppe (123) über eine verknüpfte dritte Verschlüsselungsbetriebsart verfügt;
b) die erste Mehrzahl von Mobilstationen (107, 109, 111):
(i) Kommunikationen, mit oder ohne Verschlüsselung, an die dritte Rufgruppe (123) überträgt, in Übereinstimmung mit der ersten Verschlüsselungsbetriebsart; und
(ii) Kommunikationen, mit oder ohne Verschlüsselung, von der dritten Rufgruppe (123) empfängt, in Übereinstimmung mit der dritten Verschlüsselungsbetriebsart; und
c) die zweite Mehrzahl von Mobilstationen (113, 115):
(i) Kommunikationen, mit oder ohne Verschlüsselung, an die dritte Rufgruppe (123) überträgt, in Übereinstimmung mit der zweiten Verschlüsselungsbetriebsart; und
(ii) Kommunikationen, mit oder ohne Verschlüsselung, von der dritten Rufgruppe (123) empfängt, in Übereinstimmung mit der dritten Verschlüsselungsbetriebsart.

## Revendications

1. Système de communication sans fil comprenant :
des stations mobiles (107, 109, 111, 113, 115) conçues pour transmettre et recevoir, sélectivement, des transmissions cryptées et non cryptées ;
une première pluralité des stations mobiles (107, 109, 111) appartenant à un premier groupe d'appel (119) ayant un premier mode de cryptage associé et une première clé de cryptage associée ;
une deuxième pluralité des stations mobiles (113, 115) appartenant à un deuxième groupe d'appel (121) ayant un deuxième mode de cryptage associé et une deuxième clé de cryptage associée ; et
des moyens (117) pour former un troisième groupe d'appel (123) comprenant le premier (119) et le deuxième (121) groupes d'appel et ayant une troisième clé de cryptage associée ;
dans lequel :
(i) la première pluralité de stations mobiles (107, 109, 111) est apte à communiquer au sein du troisième groupe d'appel au moyen du premier mode de cryptage et, lorsque le premier mode de cryptage requière un cryptage, au moyen de la troisième clé de cryptage ; et
(ii) la deuxième pluralité de stations mobiles (113, 115) est apte à communiquer au sein du troisième groupe d'appel au moyen du deuxième mode de cryptage et, lorsque le deuxième mode de cryptage requière un cryptage, au moyen de la troisième clé de cryptage.

2. Système de communication sans fil selon la revendication 1, dans lequel les moyens de formation du troisième groupe d'appel (123) comprennent des moyens pour communiquer une identification de la troisième clé de cryptage à la première pluralité (107, 109, 111) et la deuxième pluralité (113, 115) de stations mobiles.

3. Système de communication sans fil selon la revendication 2, dans lequel les moyens de communication sont aptes à communiquer l'identification de la troisième clé de cryptage au premier groupe d'appel (119) au moyen du premier mode de cryptage et de la première clé de cryptage.

4. Système de communication sans fil selon l'une quelconque des revendications précédentes, dans lequel une station mobile initiatrice d'appel de la première pluralité de stations mobiles (107, 109, 111) comprend :
des moyens pour transmettre un message d'instigation d'appel au sein du premier groupe d'appel (119) au moyen du premier mode de cryptage ;
des moyens pour recevoir un message d'association associant l'appel au troisième groupe d'appel (123) ; et
des moyens pour continuer l'appel au sein du troisième groupe d'appel (123) au moyen de la troisième clé de cryptage et du premier mode de cryptage.

5. Système de communication sans fil selon l'une quelconque des revendications précédentes, dans lequel :
le troisième groupe de conversation (123) a un troisième mode de cryptage associé.

6. Système de communication sans fil selon la revendication 5, dans lequel au moins une première station mobile de la première pluralité de stations mobiles (107, 109, 111) comprend :
des moyens pour déterminer une compatibilité entre le premier mode de cryptage et le troisième mode de cryptage.

7. Système de communication sans fil selon la revendication 6, dans lequel au moins la première station mobile comprend :
des moyens pour supprimer une transmission si le premier mode de cryptage n'est pas compatible avec le troisième mode de cryptage.

8. Système de communication sans fil selon la revendication 7, dans lequel la transmission est une demande d'appel.

9. Système de communication sans fil selon l'une quelconque des revendications 6 à 8, dans lequel :
au moins la première station mobile comprend en outre des moyens pour émettre une indication à destination de l'utilisateur si le premier mode de cryptage et le troisième mode de cryptage ne sont pas compatibles.

10. Système de communication sans fil selon l'une quelconque des revendications 5 à 9, dans lequel au moins une deuxième station mobile de la deuxième pluralité de stations mobiles (113, 115) comprend :
des moyens pour déterminer une compatibilité entre le troisième mode de cryptage et un mode de cryptage et/ou une clé de cryptage d'un signal reçu ; et
des moyens pour définir un indicateur d'incompatibilité en réponse à une détermination du fait que le mode de cryptage et/ou la clé de cryptage du signal reçu n'est pas compatible avec le troisième mode de cryptage.

11. Système de communication sans fil selon l'une quelconque des revendications précédentes, dans lequel au moins une deuxième station mobile de la deuxième pluralité de stations mobiles comprend :
des moyens pour déterminer une compatibilité entre un mode de cryptage d'un signal reçu et le deuxième mode de cryptage ; et
des moyens pour définir un indicateur d'incompatibilité en réponse à une détermination du fait que le mode de cryptage du signal reçu n'est pas compatible avec le deuxième mode de cryptage.

12. Système de communication sans fil selon la revendication 10 ou la revendication 11, dans lequel la deuxième station mobile comprend en outre des moyens pour supprimer le signal reçu et/ou générer une indication d'incompatibilité à destination de l'utilisateur, en réponse à l'indication d'incompatibilité.

13. Système de communication sans fil selon l'une quelconque des revendications 5 à 12, dans lequel la première et la deuxième pluralités de stations mobiles utilisent la troisième clé de cryptage lorsqu'un cryptage est requis, et :
a) la première pluralité de stations mobiles (107, 109, 111) est apte à :
(i) transmettre des communications au troisième groupe d'appel (123), avec ou sans cryptage, selon le premier mode de cryptage ; et
(ii) recevoir des communications en provenance du troisième groupe d'appel (123), avec ou sans cryptage, selon le troisième mode de cryptage ; et
b) la deuxième pluralité de stations mobiles (113, 115) est apte à:
(i) transmettre des communications au troisième groupe d'appel (123), avec ou sans cryptage, selon le deuxième mode de cryptage ; et
(ii) recevoir des communications en provenance du troisième groupe d'appel (123), avec ou sans cryptage, selon le troisième mode de cryptage.

14. Système de communication sans fil selon l'une quelconque des revendications précédentes, dans lequel au moins une autre station mobile du premier groupe d'appel (119) ou du deuxième groupe d'appel (121) est apte à :
changer son mode d'un mode de transmission non crypté à un mode de transmission crypté, sous la commande de l'utilisateur, avant l'établissement du troisième groupe d'appel (123) ; et
continuer à utiliser le mode de cryptage sélectionné, après l'établissement du troisième groupe d'appel (123).

15. Système de communication sans fil selon l'une quelconque des revendications précédentes, dans lequel le système de communication est un système de communication cellulaire TETRA.

16. Procédé de gestion de groupes d'appel pour un système de communication sans fil comportant des stations mobiles (107, 109, 111, 113, 115) conçues pour transmettre et recevoir, sélectivement, des transmissions cryptées et non cryptées, une première pluralité des stations mobiles (107, 109, 111) appartenant à un premier groupe d'appel ayant un premier mode de cryptage associé et une première clé de cryptage associée, et une deuxième pluralité des stations mobiles appartenant à un deuxième groupe d'appel ayant un deuxième mode de cryptage associé et une deuxième clé de cryptage associée ;
le procédé comprenant les étapes de :
formation d'un troisième groupe d'appel (123) comprenant le premier et le deuxième groupes d'appel et ayant une troisième clé de cryptage associée ;
au moins une station mobile de la première pluralité de stations mobiles (107, 109, 111) communiquant au sein du troisième groupe d'appel (123) au moyen du premier mode de cryptage et, lorsque le premier mode de cryptage requière un cryptage, au moyen de la troisième clé de cryptage ; et
au moins une station mobile de la deuxième pluralité de stations mobiles (113, 115) communiquant au sein du troisième groupe d'appel (123) au moyen du deuxième mode de cryptage et, lorsque le deuxième mode de cryptage requière un cryptage, au moyen de la troisième clé de cryptage.

17. Procédé de gestion de groupes d'appel dans un système de communication sans fil selon la revendication 16, dans lequel :
a) le troisième groupe de conversation (123) a un troisième mode de cryptage associé ;
b) la première pluralité de stations mobiles (107, 109, 111) :
(i) transmet des communications au troisième groupe d'appel (123), avec ou sans cryptage, selon le premier mode de cryptage ; et
(ii) reçoit des communications en provenance du troisième groupe d'appel (123), avec ou sans cryptage, selon le troisième mode de cryptage ; et
c) la deuxième pluralité de stations mobiles (113, 115) :
(i) transmet des communications au troisième groupe d'appel (123), avec ou sans cryptage, selon le deuxième mode de cryptage ; et
(ii) reçoit des communications en provenance du troisième groupe d'appel (123), avec ou sans cryptage, selon le troisième mode de cryptage.
